Europäisches Patentamt

(19) European Patent Office

Office européen des brevets

(11) Numéro de publication: **0 032 857**
**B1**

(12) **FASCICULE DE BREVET EUROPEEN**

(45) Date de publication du fascicule du brevet: **04.01.84**

(51) Int. Cl.³: **B 60 T 11/16**

(21) Numéro de dépôt: **81400038.6**

(22) Date de dépôt: **13.01.81**

(54) Maître cylindre.

(30) Priorité: **17.01.80 IT 1927080**

(43) Date de publication de la demande:
**29.07.81 Bulletin 81/30**

(45) Mention de la délivrance du brevet:
**04.01.84 Bulletin 84/1**

(84) Etats contractants désignés:
**DE FR GB SE**

(56) Documents cités:
**DE - A - 2 746 260**
**DE - C - 809 032**
**SE - A - 137 348**
**US - A - 3 165 896**

(73) Titulaire: **BENDITALIA S.p.A.**
**Via Cavalli 53/A**
**I-26013 Crema (IT)**

(72) Inventeur: **Cadeddu, Leonardo**
**Via Piacenza 29/D**
**Crema (CR) (IT)**

(74) Mandataire: **Poidatz, Emmanuel et al,**
**Service Brevets Bendix 44 rue François 1er**
**F-75008 Paris (FR)**

Courier Press, Leamington Spa, England.

Maitre-cylindre

La présente invention se rapporte aux maître-cylindres du type dans lequel une bague de soupape en matériau élastomère, montée avec jeu axial et radial autour du piston, coopère avec l'aléssage et avec un épaulement radial du piston pour contrôler le passage de fluide depuis une chambre d'alimentation vers une chambre de compression, une bague de butée, montée autour du piston, permettant de repousser la bague de soupape en éloignement de l'épaulement radial lorsque le piston est rappelé élastiquement vers sa position de repos pour permettre l'écoulement de fluide entre les deux chambres au travers d'un espace radial séparant le piston de la bague de butée.

Un tel mâitre-cylindre est décrit dans le document DE—A—2 746 260 auquel on pourra avantageusement se référer.

Il est à remarquer que dans ce type de maître-cylindre, lors de la course de compression du piston, la bague de soupape est plaquée à la fois contre la bague de butée et contre l'épaulement radial du piston et masque entièrement l'espace radial qui sépare ces derniers éléments.

Une analyse plus poussée du comportement de la bague de soupape lors de la course de compression du piston permet de constater qu'une partie de cette bague est forcée en pénétration sur une courte distance dans cet espace radial, cette partie reprenant normalement une forme plane lorsque le piston est rappelé dans sa position de repos. Néanmoins, des essais d'endurance ont prouvé que la bague de butée finit par être détériorée à cause de ces déformations répétées. Cette détérioration risque d'être d'autant plus important que les circuits de freinage tendent actuellement à fonctionner sous des pressions de plus en plus élevées, notamment à cause de l'utilisation de plus en plus répandue de freins à disque et à cause du remplacement des matériaux de friction à base d'amiante par d'autres matériaux dont les coefficients de friction sont plus faibles.

Dans le document SE—A—137 348, il est montré que l'on peut éviter ce inconvénient en prévoyant à la périphérie du piston ainsi qu'à l'intérieur de la bague de butée des surfaces côniques complémentaires de telle sorte que l'espace radial entre le piston et cette bague soit réduit pratiquement à zéro lors de la course de compression du piston.

Si l'on se réfère à nouveau au document DE—A—2 746 260 déjà cité, on constate que la position de repos du piston est définie par venue en contact avec une butée fixe, qui sert également de butée à la couronne de butée. Comme il est obligatoire de prévoir que le piston ait dans cette région, un diamètre pratiquement voisin de celui de l'alésage en vue d'un bon guidage, il est donc nécessaire de ménager dans le piston une entaille longitudinale dans laquelle se projette la butée fixe en question.

Ceci représente une opération supplémentaire lors de la fabrication du piston et un contrainte lors de l'assemblage du maître-cylindre puisque le piston doit être orienté angulairement de manière adéquate.

Dans le but de pallier ces inconvénients, notamment afin de simplifier la fabrication du piston et l'assemblage du maître-cylindre, dans un maître-cylindre connu du brevet DE précité et conforme au préambule de la revendication, l'invention est caractérisée en ce que le piston comporte une partie postérieure, à l'opposé de la tête du piston, coulissant de manière étanche dans l'alésage du boitier, et une partie médiane de diamètre réduit reliant ladite partie postérieure à ladite tête pour définir un espace annulaire dans lequel se projette la butée fixe.

L'invention sera maintenant décrite, à titre d'exemple, en se référant aux dessins annexés, dans lesquels:

— la figure 1 est une vue en coupe longitudinale partielle d'un maître-cylindre selon l'invention;

— la figure 2 est une vue agrandie de la partie de la figure 1 entourée en traits interrompus;

— la figure 3 est une vue agrandie similaire à celle de la figure 2 représentant les éléments du maître-cylindre lors de la course de compression du piston;

— la figure 4 est une vue agrandie similaire à celle de la figure 2 représentant les éléments du maître-cylindre lors de la course de retour du piston; et,

— la figure 5 est une vue agrandie similaire à celle de la figure 4, illustrant un détail de fonctionnement lors de la course de retour du piston.

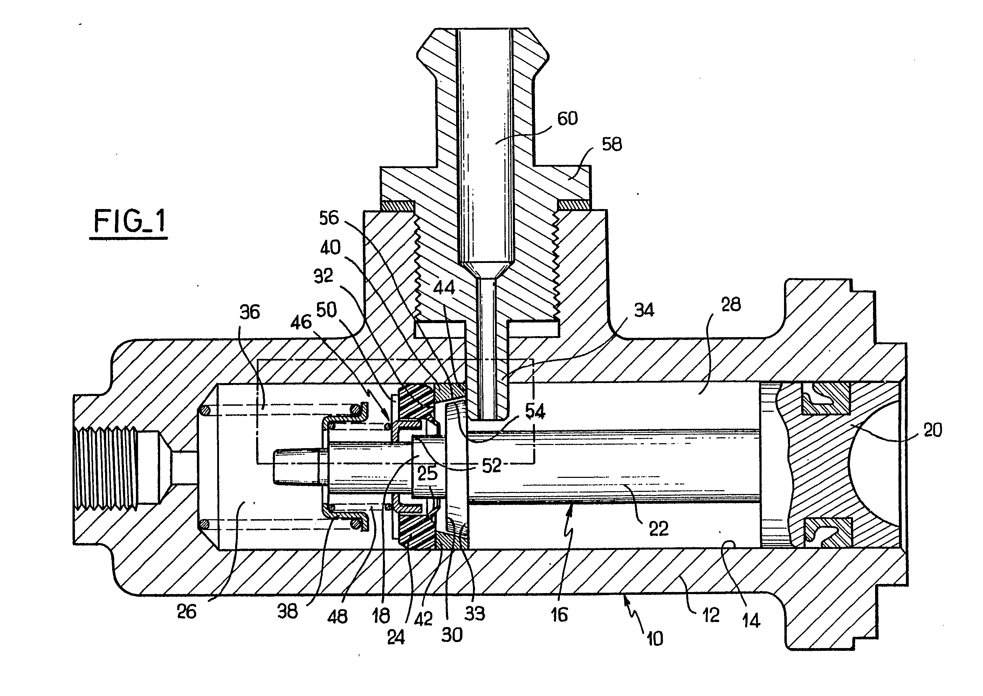

Le maître-cylindre 10 représenté la figure 1 comprend un boîtier 12 à l'intérieur duquel est défini un alésage 14 dans lequel coulisse un piston 16. Celui-ci comporte une tête 18, une partie postérieure 20 de grand diamètre coulissant de manière étanche dans l'alésage 14 et un partie médiane 22 de diamère réduit reliant la tête 18 et la partie postérieure 20. La tête 18 est susceptible de coopérer avec une bague 24 réalisée en matériau élastomère pour séparer dans l'alésage 14 une chambre de pression 26 susceptible d'être reliée à un circuit desservant des moteurs de freins, non représentés, et une chambre d'alimentation 28 susceptible d'être reliée un réservoir de fluide, également non représenté.

La tête 18 comporte un épaulement radial frontal 30 susceptible de venir en appui étanche contre la face latérale 32 de la bague élastomère 24. Cette dernière coulisse à sa périphérie le long de la paroi interne de l'alésage 14 et est montée avec un jeu radial autour de la tête du piston. La tête 18 comporte également un épaule-ment radial postérieur 33 qui est susceptible de venir engager une butée 34 pour définir une position de repos pour le piston 16 lorsque celui-ci est rappelé vers la droite, si l'on considère la figure 1, par un ressort 36 prenant appui sur une coupelle 38 solidaire de la tête 18. Une couronne de butée 40 est montée coulissante dans l'alésage 14 et autour de la tête 18 du piston 16, elle comporte une face radiale 42 adjacente à la bague élastomère 24 et une face postérieure 44 qui est susceptible de venir engager la butée 34 pour dégager la bague élastomère 24 de l'épaulement radial frontal 30 lorsque le piston occupe sa position de repos, l'épaisseur axiale de la couronne de butée 40 étant supérieur à la distance axiale séparant les épaulements radiaux frontal et postérieur 30 et 33 de la tête 18 du piston 16. Un ensemble de rappel 46, composé, d'un ressort 48, en appui sur la coupelle 38, et d'une rondelle 50, adjacente à la bague élastomère 24 rappelle cette dernière en direction de la couronne de butée 40, un second épaulement radial frontal 52 de la tête 18 du piston 16, séparé de l'épaulement radial 30 d'une distance supérieur à l'épaisseur axiale de la bague élastomère 24, limitant la course de la rondelle 50 en direction de l'épaulement 30. La force du ressort 48 est inférieur à celle du ressort 36.

La tête 18 du piston 16 comporte une surface de contact 54, limitée d'une part par le bord externe de l'épaulement radial 30 et d'autre part par le bord externe de l'épaulement radial postérieur 33, dont les normales sont inclinées tant par rapport à l'axe de l'alésage que par rapport aux plans perpendiculaires à cet axe, et la couronne de butée 40 comporte une surface de contact 56 complémentaire. En d'autres termes, les surfaces de contact 54 et 56 sont telles que tout éloignement axial de l'une par rapport à l'autre entraîne l'apparition d'un jeu radial entre elles.

Dans le mode de réalisation préféré de l'invention illustré aux figures, la surface de contact 54 consiste en un tronc de cône de révolution dont le sommet est situé sur l'axe de l'alésage et du côté de la chambre de pression. L'angle des génératrices du cône de révolution par rapport à l'axe de l'alésage est choisi de manière à éviter tout blocage de la couronne de butée 40 sur la tête de piston par grippage. Dans le mode de réalisation préféré illustré aux figures, cet angle est d'environ 18 degrés. Dans ce mode de réalisation, la couronne de butée 40 est réalisée en acier ou en laiton et le piston 16 en acier.

Pour terminer, la butée 34 constitue l'extrémité d'un raccord 58 fixé sur le boîtier 12 et muni d'un passage 60 permettant la mise en communication de la chambre d'alimentation 28 avec un réservoir non représenté. De plus, la bague élastomère 24 est munie d'une lèvre 25 faisant office de clapet de non-retour.

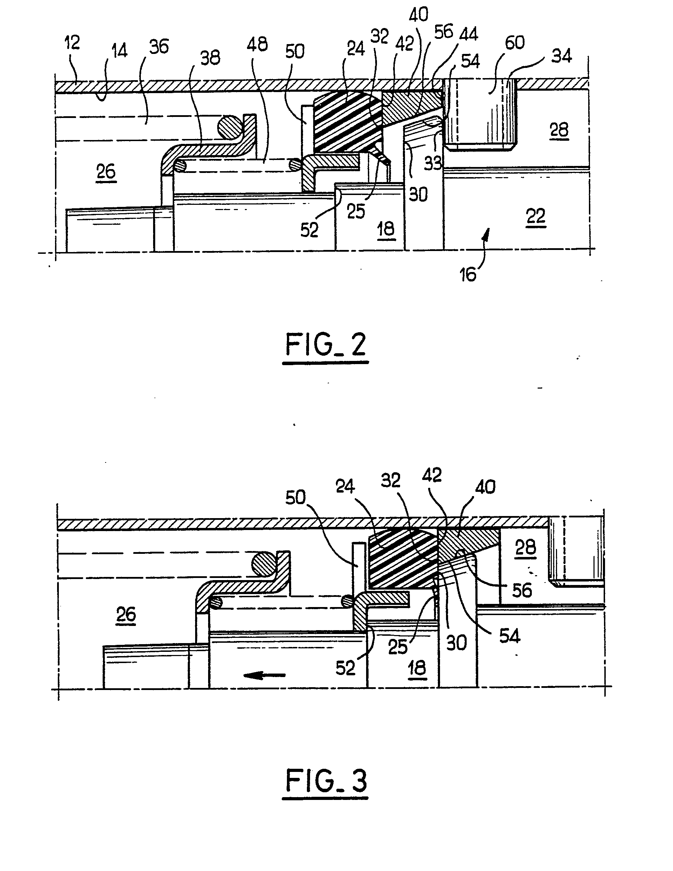

Le fonctionnement du maître-cylindre va maintenant être décrit en se référant aux figures 2 à 5. La figure 2 est une vue agrandie de la partie de la figure 1 entourée en traits interrompus, représentant les éléments décrits ci-avant dans leurs positions de repos, le ressort 36 repoussant la coupelle 38 et la tête 18 en engagement contre la butée 34 et la couronne de butée 40 prenant appui sur cette même butée pour repousser la bague élastomère 24, en éloignement de l'épaulement radial 30, à l'encontre du ressort 48.

On notera que dans cette situation, les surfces de contact 54 et 56 de la tête 18 et de la couronne de butée 40 sont espacées radialement l'une par rapport à l'autre et qu'il existe une libre communication de fluide entre les deux chambres 26 et 28.

La figure 3 représente les éléments du maître-cylindre 10 lorsque le piston 16 effectue une course de compression dans le sens de la flèche. Le piston 16 assure l'entraînement de la couronne de butée 40 par engagement des surfaces de contact 54 et 56, et la bague élastomère 24 assure l'étanchéité entre lex deux chambres 26 et 28 par coopération d'une part de sa périphérie avec l'alésage 14 et d'autre part de sa face latérale 32 avec l'épaulement radial 30 du piston et la face radiale 42 de la couronne de butée.

Dans cette situation, on notera que l'espacement, radial qui existe au repos entre les surfaces de contact 54 et 56 est réduit pratiquement à zéro et que la face latérale 32 de la bague élastomère 24 est en appui sur une surface plane, composée de l'épaulement radial 30 du piston et de la face radiale 42 de la couronne de butée, pratiquement continue, aux limites de tolérances près. Cette disposition permet de diminuer notablement les déformations de la bague élastomère.

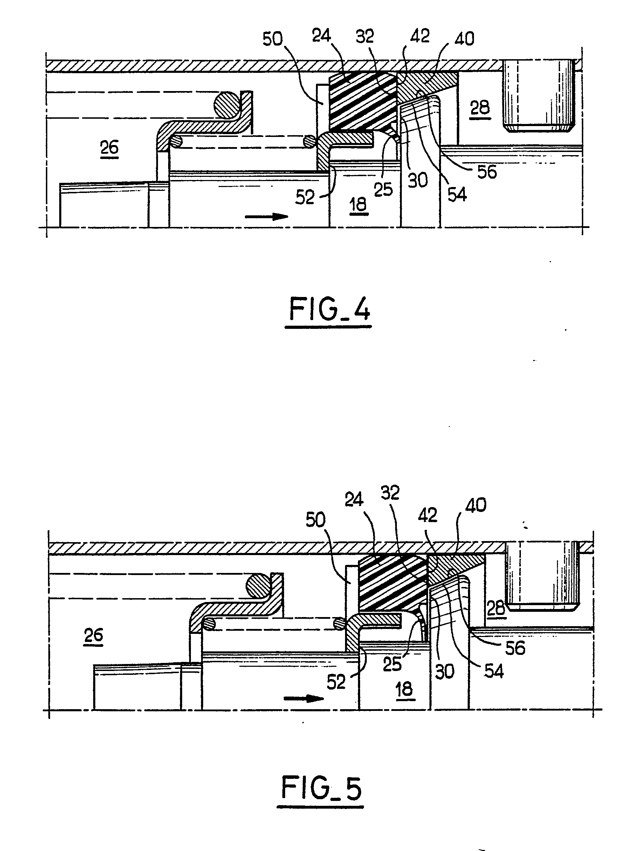

La figure 4 représente les éléments du maître-cylindre 10 lorsque le piston effectue une course de "relâchement", dans le sens de la flèche.

Le piston 16 est rappelé par le ressort 36 en direction de la butée 34. Par frottement contre la paroi de l'alésage 14, la bague élastomère 24 et la couronne de butée 40 sont rappelées en butée contre la rondelle 50, la lèvre 25 de la bague élastomère 24 restant en contact avec l'épaulement radial 30 du piston pour empêcher tout retour de fluide depuis la chambre de compression 26 vers la chambre d'alimentation 28 au travers du jeu axial et du jeu radial qui séparent alors respectivement la face latérale 32 de l'épaulement radial 30 et la surface de contact 54 de la surface de contact 56, comme représenté à la figure 4.

La figure 5 illustre le rôle de la lèvre 25 de la bague élastomère lors de la course "de relâchement" du piston.

Il peut se produire que, sous l'effet du ressort 36, le piston 16 soit rappelé vers sa position de repos à une vitesse telle que la pression régnant dans la chambre de pression chute momentanément au-dessous de la pression atmosphérique. La lèvre 25 de la bague élastomère est alors déformée en éloignement de l'épaule- ment radial 30 pour permettre le passage de fluide depuis la chambre d'alimentation vers la chambre de pression.

Lorsque le piston a terminé sa course "de relâchement", tous les éléments du maître-cylindre retournent dans les positions de la figure 2.

On notera que l'entraînement de la couronne de butée par engagement des surfaces de contact tronçoniques 54 et 56 permet une simplification notable de la forme du piston 16. En effet, dans l'appareil connu décrit dans le brevet DE—A—2746260 déjà cité, l'entraînement de la couronne de butée s'effectue au moyen d'un épaulement radial du piston adjacent à la surface postérieure de la couronne de butée. Il est par conséquent nécessaire de prévoir une rainure longitudinale le long du piston pour permettre le passage de la butée. Dans la cas de la présente invention, cette rainure n'ayant aucun lieu d'être, le piston comporte par conséquent une partie médiane de diamètre réduit comme représenté.

On notera que, compte tenue de cette configuration, le guidage du piston dans l'alésage s'effectue d'une part grâce à la partie postérieure 20, et d'autre part grâce à la couronne de butée 40 qui constitue, lors de la course de compression du piston, une portée de guidage pour ce dernier. Les tolérances d'usinage choisies aussi réduites que possible, permettant un "auto-centrage" de la couronne par rapport au piston. De ce fait, la dimension axiale de la partie postérieure 20 peut être sensiblement réduite par rapport aux appareils connus de l'art antérieur.

## Revendication

1. Maître-cylindre (10), du type comportant un boîtier (12) muni d'un alésage (14) dans lequel coulisse un piston (16), ce dernier comportant une tête (18) coopérant avec une bague (24) en matériau élastomère, elle-même coulissant de manière étanche à sa périphérie dans l'alésage, pour séparer dans l'alésage (14) une chambre de pression (26) d'une chambre d'alimentation (28) en fluide, la tête du piston présentant un épaulement radial (30) susceptible de venir en appui étanche contre la face latérale (32) adjacente de la bague élastomère, une couronne de butée (40) étant susceptible de dégager ladite bague élastomère (24) dudit épaulement radial (30) lorsque le piston (16) occupe sa posiiton de repos pour permettre la communication entre les deux chambres précitées, ladite couronne de butée (40) étant montée coulissante dans ledit alésage (14) et entraînée par le piston (16) lorsque celui-ci est déplacé de sa position de repos, le piston comportant une surface de contact cônique (54) limitée par le bord externe dudit épaulement radial (30), et ladite couronne (40) comportant une surface de contact complémentaire (56), ladite couronne (40) comportant en outre une face radiale (42) adjacente à ladite bague élastomère (24), ladite face radiale (42) et ledit épaulement radial (30) étant sensiblement coplanaiares lorsque lesdites surfaces de contact (54, 56) du piston et de la couronne sont en contact mutuel, et une butée (34) montée fixe sur ledit boîtier (12) contre laquelle viennent buter ladite couronne de butée (40), et ladite tête de piston (18), pour lequel est ansi définie sa position de repos, caractérisé en ce que ledit piston comporte une partie postérieure (20), à l'opposé de ladite tête (18), coulissant de manière étanche dans ledit alésage (14), et une partie médiane (22) de diamètre réduit reliant ladite partie postérieure à ladite tête pour définir un espace annulaire dans lequel se projette ladite butée (34).

## Patentanspruch

1. Hauptbremszylinder (10) mit einem Gehäuse (12), das mit einer Bohrun (14) versehen ist, in der ein Kolben (16) gleitet, wobei der letztere einen Kopf (18) aufweist, der mit einem Ring (24) aus elastomerem Material zusammenwirkt, der seinerseits an seinem Umfang abgedichtet in der Bohrung gleitet, um in der Bohrung (14) eine Druckkammer (26) von einer Strömungsmittelzufuhrkammer (28) zu trennen, wobei der Kopf des Kolbens eine radiale Schulter (30) aufweist, die sich abgedichtet an die angrenzende Stirnseite (32) des elastomeren Rings anlegen kann, einem Anschlagsring (40), der in der Lage ist, den elastomeren Ring (24) außer Eingriff mit der radialen Schulter (30) zu bewegen, wenn der Kolben (16) seine Ruhestellung einnimmt, um die Verbindung zwischen den beiden genannten Kammern Herzustellen, wobei der Anschlagring (40) in der Bohrung (14) gleitend gelagert ist und vom Kolben (16) mitgenommen wird, wenn dieser aus seiner Ruhestellung verschoben wird, wobei der Kolben eine konische Kontaktlfäche (54) aufweist, die von dem Außenrand der radialen Schulter (30) begrenzt wird, und der Anschlagring (40) eine komplementäre Kontaktfläche (56) aufweist, wobei der Anschlagring (40) ferner eine radiale Stirnseite (42) angrenzend an dem elastomeren Ring (24) aufweist, wobei dei besagte radiale Stirnseite (42) und die radiale Schulter (30) im wesentlichen koplanar sind, wenn die Kontaktflächen (54, 56) des Kolbens und des Anschlagringes aneinander anliegen, und einem Anschlag (34), der fest am Gehäuse (12) angebracht ist und an den sich der Anschlagring (40) und der Kopf des Kolbens (18) anlegen, für den auf diese Weise seine Ruhestellung definiert wird, dadurch gekennzeichnet, daß der Kolben einen dem Kopf (18) gegenüberliegenden hinteren Abschnitt (20), der in der Bohrung (14) abgedichtet gleitet, und einen mittleren Ab-schnitt (22) verringerten Durchmessers auf-weist, der den hinteren Abschnitt mit dem Kopf verbindet, um einen Ringraum zu bilden, in den der besagte Anschlag (34) vorsteht.

**Claim**

1. A master cylinder (10) of the type comprising a casing (12) provided with a bore (14) slidably receiving a piston (16), the latter comprising a head (18) cooperating with a ring (24) of elastomeric material sealingly sliding at its periphery within the bore for separating a pressure chamber (26) from a fluid feed chamber (28) within said bore (14), the head of the piston comprising a radial shoulder (30) adapted to sealingly engage the adjacent lateral face (32) of the elastomeric ring, an annular abutment member (40) adapted to disengage said elastomeric ring (24) from said radial shoulder (30) when the piston (16) occupies its rest position for permitting fluid communication between said two chambers, said annular abutment member (40) being slidingly mounted in said bore (14) and being entrained by the piston (16) when the piston is displaced from its rest position, the piston comprising a conical contact surface (54) limited by the external edge of said radial shoulder (30), and said annular abutment member (40) comprising a complementary contact surface (56), said annular abutment member (40) furthermore comprising a radial face (42) adjacent said elastomeric ring (24), said radial face (42) and said radial shoulder (30) being substantially coplanar when said contact surfaces (54, 56) of the piston and the annular abutment member are in mutual contact, and an abutment (34) fixedly mounted on the casing (12) which is engaged by the annular abutment member (40) and the head of the piston (18), for which its rest position is defined thereby, characterised in that said piston comprises opposite to said head (18), a posterior portion (20) sealingly sliding in said bore (14), and an intermediate portion (22) of reduced diameter connecting said posterior portion to said head for defining an annular space into which said abutment (34) projects.

FIG_1

0032857

FIG_2

FIG_3

FIG_4

FIG_5